# EUROPEAN PATENT SPECIFICATION

(11) **EP 4 071 339 B1**
(45) Date of publication and mention of the grant of the patent: **29.05.2024**
(21) Application number: 21206568.4
(22) Date of filing: 04.11.2021
(51) Int. Cl.: F01P 3/18, F28D 1/04, F01P 7/16, F01P 3/12, F02B 29/04, F28D 21/00

(54) **A CONDITIONING APPARATUS FOR AN ENGINE AND CONTROL METHODS THEREOF**
KONDITIONIERUNGSVORRICHTUNG FÜR EINEN MOTOR UND STEUERUNGSVERFAHREN DAFÜR
APPAREIL DE CONDITIONNEMENT POUR MOTEUR ET SES PROCÉDÉS DE COMMANDE

(30) Priority: 22.10.2020 IT 202000025024
(43) Date of publication of application: 12.10.2022
(73) Proprietor: FPT Motorenforschung AG, 9320 Arbon (CH)
(72) Inventor: FESSLER, Harald, 9320 ARBON (CH)
(74) Representative: Studio Torta S.p.A.

(56) References cited:
- WO-A1-02/48516
- WO-A1-03/042619
- US-A- 4 061 187
- US-A- 4 620 509
- US-A- 5 353 757

## Description

### TECHNICAL FIELD

The invention concerns a conditioning apparatus for an engine, in particular a turbocharged engine.

The invention also concerns methods for controlling the aforementioned conditioning apparatus.

### BACKGROUND OF THE INVENTION

Conditioning apparatuses for engines commonly include a first conditioning circuit to circulate coolant (e.g. water) from the engine coolant jacket to a radiator, where the coolant transfers the heat taken from the engine to ambient air.

Conditioning apparatuses also include a second conditioning circuit for cooling the charge air of the engine.

The second conditioning circuit usually includes a charge air cooler through which ambient air is directed to take heat from the charge air.

In some cases, the second conditioning circuit is an indirect conditioning circuit, in which a refrigerant, usually low temperature water is circulated from the charge air cooler to a further radiator, normally placed in front of the other radiator for the engine water.

In this context, a need is felt for an improvement of the known conditioning apparatuses, possibly in terms of reduction of components and/or increase of use flexibility and thus conditioning performances.

Furthermore, a need is felt to develop appropriate control methods to maximize the performances of the improved conditioning apparatuses.

Examples of known conditioning apparatus for engine systems are disclosed in publications WO2003042619 A1, US5353757 A, US4620509 A, WO200248516 A1 or US4061187 A.

An object of the invention is to satisfy at least one of the above needs, preferably in a simple and cost effective manner.

### SUMMARY OF THE INVENTION

The object is reached by a conditioning apparatus and control methods thereof, as claimed in the appended set of claims.

Dependent claims set out particular embodiments of the disclosure.

### BRIEF DESCRIPTION OF DRAWINGS

For a better understanding of the invention, preferred embodiments are disclosed in the following, by way of nonlimiting examples, with reference to the attached drawings wherein:
- Figure 1 is a scheme representing the layout of a conditioning apparatus according to an embodiment of the disclosure;
- Figure 2 is another scheme representing the layout of a conditioning apparatus according to a further embodiment of the disclosure.

### DETAILED DESCRIPTION OF THE INVENTION

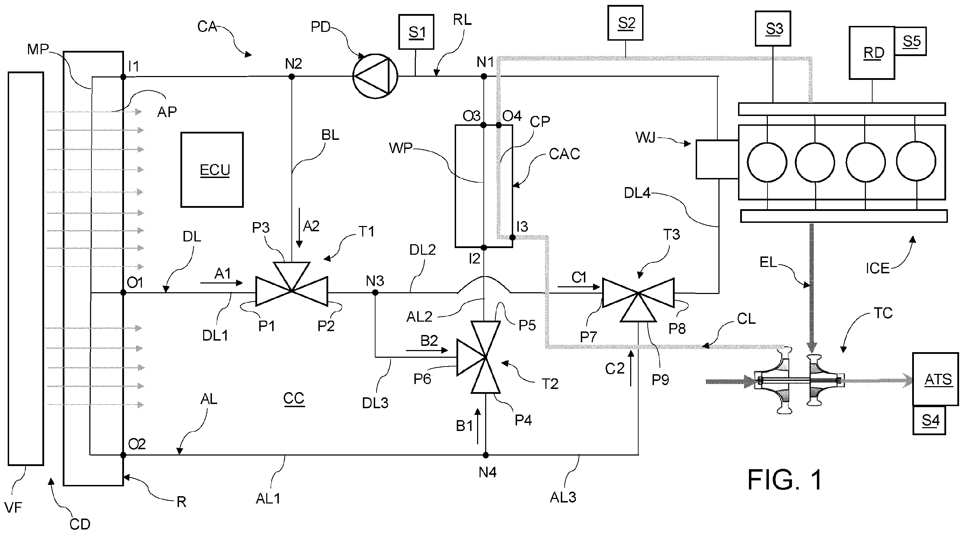

In figure 1, reference symbol CA indicates a conditioning apparatus for an engine ICE, in particular an internal combustion engine provided with a turbocharger TC.

Engine ICE is also provided with a retarder device RD, which is configured to slow down the engine ICE by dissipating the engine power into heat. Retarder device RD is a well-known device, whose operation will not be described in detail for reasons of conciseness.

Moreover, engine ICE is also provided with an after treatment system ATS, in particular comprising a selective catalytic reduction (SCR) catalyst. The after treatment system ATS is a well-known device, whose operation will not be described in detail for reasons of conciseness.

Exhaust gases from engine ICE are directed to the turbocharger TC such that the enthalpy thereof is converted into mechanical work to compress the charge air.

Conditioning apparatus CA comprises:
- a conditioning device CD configured for cooling a medium, in particular water, (or a mixture of water and chemicals such as antifreeze and/or rust inhibitors) to a plurality of temperature levels;
- an engine jacket or block WJ defining a heat exchange zone between the medium and the engine ICE; and
- a charge air cooler CAC configured for cooling the charge air of engine ICE by means of the medium.

With greater detail, conditioning device CD comprises a heat exchanger R, in particular a radiator, defining a path MP for the medium and another path AP for a further medium, specifically air and more specifically to be taken from the ambient.

Conditioning device CD further comprises one or more ventilation elements VF, e.g. fans, to suck or push air from the ambient and to force it along path AP.

More precisely, paths MP, AP are separated from one another but in thermal contact with one another to allow heat exchanges to occur between the two mediums advancing through the respective paths MP, AP.

Similarly, charge air cooler CAC internally defines two separated paths CP, WP in thermal communication with one another and respectively for the charge air of engine ICE and the medium, such that heat exchanges may occur between the medium and the charge air.

Path CP is connected to an output of the turbocharger TC through a charge air line CL provided to conduct the charge air compressed by the turbocharger TC through the charge air cooler CAC. Turbocharger TC heats ambient air by compressing it thanks to the mechanical work produced by the same turbocharger TC by converting the enthalpy of exhaust gases of engine ICE.

Engine ICE comprises an exhaust line EL connected to the turbocharger TC to supply the latter with the exhaust gases.

Conditioning apparatus CA further comprises a conditioning circuit CC, more precisely a cooling circuit, which allows the circulation of the medium through the engine jacket WJ and the conditioning device CD, more precisely through the path MP of heat exchanger R.

Conditioning circuit CC includes a delivery line DL configured to bring the medium from the conditioning device CD, i.e. from path MP of heat exchanger R, to the engine jacket WJ, i.e. toward the heat exchange zone defined therein.

Moreover, conditioning circuit CC includes also a return line RL configured to take heated medium from the engine jacket WJ and to supply such heated medium to the conditioning circuit CC.

In practice, the conditioning device CD or, more precisely, the heat exchanger R has an opening I1 that is connected to the return line RL to receive the heated medium, and a further opening O1 that is connected to the delivery line DL to allow a medium flowing through there toward the heat exchange zone in the engine jacket WJ.

In other words, the return line RL and the delivery line DL have respective ends connected to the heat exchanger R at the openings I1, O1, respectively. The other ends of the return line RL and the delivery line DL are both connected to the engine jacket WJ.

The openings I1, O1 define respectively an inlet and an outlet of the heat exchanger R; therefore, the medium flows within the heat exchanger R through path MP according to an advancing direction, namely from opening I1 towards opening O1.

Conditioning device CD receives the medium at opening I1 at a first temperature level as a function of the heat absorbed by the medium at the heat exchange zone defined by the engine jacket WJ. Moreover, conditioning device CD releases the received medium through the opening O1 at a second temperature level, which is lower than the first temperature level because the medium transfers heat to the further medium flowing through path AP.

Actually, conditioning device CD defines, in the embodiments shown, a cooling device for cooling the medium heated by the operation of engine ICE.

Conditioning device CD (more precisely, the heat exchanger R) comprises a further opening 02 in fluid communication with path MP placed downstream of the opening O1 according to the advancing direction of the medium within heat exchanger R.

Therefore, conditioning device CD is configured to release the medium through the opening 02 at a third temperature level lower than the second temperature level, that is the release temperature level of the medium at opening O1.

Indeed, the medium that reaches the opening O2 runs through a longer portion of path MP. Hence, a higher amount of heat is transferred to the further medium through path AP, compared to that transferred by the medium released through opening O1.

In other words, the medium released through opening O2 flows on a larger heat exchange surface than that on which the medium released through opening O1 flows. Opening O2 defines a second outlet for cooling device CD, more precisely for heat exchanger R.

The medium released through opening O2 is exploited to cool down the charge air of engine ICE. The conditioning circuit CC comprises, in fact, an additional line AL connecting the opening O2 to path WP within charge air cooler CAC. The same additional line AL connects path WP to the return line RL.

Hence, the additional line AL connects the opening O2 at one end to a node N1 of the return line RL at the other end, passing through charge air cooler CAC. Therefore, path WP is defined by a portion of the additional line AL.

Preferably, the return line RL comprises a pumping device PD, in particular a pump, for forcing the heated medium from the heat transfer zone, within engine jacket WJ, to opening I1. In the embodiments shown, pumping device PD is arranged downstream of the node N1, according to the advancing direction of the heated medium through the return line RL.

With greater detail, charge air cooler CAC has two openings I2, O3 defining the ends of path WP and respectively an inlet and an outlet for the charge air cooler CAC itself. Within the charge air cooler CAC, the medium advances along path WP from opening I2 to opening O3. As well, through the additional line AL, the medium flows from opening O2 to node N1.

Similarly for path WP, charge air cooler CAC has two openings I3, O4 defining the ends of path CP and respectively a further inlet and a further outlet for the charge air cooler CAC itself. Within charge air cooler CAC, the charge air advances along path CP from opening I3 to opening O4.

Conditioning apparatus CA is configured such that the amounts of medium, i.e. the flow rate released through openings O1, O2 is controlled.

Actually, the delivery line DL and the additional line AL respectively comprise adjusting assemblies T1, T2 that are respectively configured to control the flow through openings O1, O2 directed toward the engine jacket WJ and charge air cooler CAC.

With greater detail, the adjusting assemblies T1, T2 comprise each a flow regulating device, such as a thermostat or a valve, possibly electronically controllable.

Conditioning apparatus CA includes also a control unit ECU configured to control the opening or closing of the flow regulating devices.

For example, one of adjusting assemblies T1, T2 may consist of a flow regulating device having a single valve body or regulating body.

The delivery line DL includes two branches DL1, DL2 respectively upstream and downstream of the flow regulating device of adjusting assembly T1; as well, the additional line AL includes two branches AL1, AL2 respectively upstream and downstream of the flow regulating device of adjusting assembly T2.

From now on, expressions like "upstream of" and "downstream of" will be referred to the advancing direction of the medium, in use, through the relevant portion of conditioning circuit CC.

The flow regulating device of adjusting assembly T1 has a port P1 arranged to receive the flow of the medium from opening O1 and in particular connected to branch DL1.

The flow regulating device of adjusting assembly T1 has another port P2 preferably connected to branch DL2 to let the medium flowing toward the engine jacket WJ.

Conveniently, the same flow regulating device comprises a further port P3.

The conditioning circuit CC further comprises a bypass line BL connecting the return line RL to the further port P3 and thus to delivery line DL, such that the heated medium flowing through the return line RL can bypass the conditioning device CD. In other words, port P3 is arranged to receive the flow of the medium through the bypass line BL.

Port P2 selectively communicates with ports P1, P3 to allow the advancing of the sum of the flows from branch DL1 and the bypass line BL toward the engine jacket WJ.

More precisely, the bypass line BL extends from a node N2 of the return line RL to the further port P3 of adjusting assembly T1. Preferably, node N2 is placed downstream of node N1 and conveniently downstream of pumping device PD.

Adjusting assembly T1 is configured to control the flow of medium through the bypass line BL together with the flow of medium through the openings I1, O1. The flow of medium through the port P2 connected with branch DL2 is the sum of the flows through the other ports P1, P3, namely the sum of the flow from opening O1 and from bypass line BL.

Therefore, the flow regulating device of adjusting assembly T1 is represented in figure 1 as a three-way valve, without loses of generality, although it may comprise two separate coordinated thermostats. The ports P1, P2, P3 of the adjusting assembly T1 communicate with each other in a selective manner due to the operation of the corresponding flow regulating device.

The flow regulating device of adjusting assembly T2 has a port P4 arranged to receive the flow of the medium from opening O2 and in particular connected to branch AL1.

The flow regulating device of adjusting assembly T2 has another port P5 preferably connected to branch AL2 to let the medium flowing toward the charge air cooler CAC.

Conveniently, the same flow regulating device comprises a further port P6.

The delivery line DL further comprises a further branch DL3, in particular branching from branch DL2, which connects the same delivery line DL to the further port P6 and thus to additional line AL upstream of charge air cooler CAC, such that part of the flow through the delivery line DL can be redirected to charge air cooler CAC. In other words, port P6 is arranged to receive the flow of medium through branch DL3.

Port P5 selectively communicates with ports P4, P6 to allow the advancing of at least a portion of the sum of the flows of medium from opening O2 and branch DL3 toward the charge air cooler CAC through the additional line AL.

More precisely, the branch DL3 extends from a node N3 of the delivery line DL to the further port P6 of adjusting assembly T2.

Adjusting assembly T2 is configured to control the flow of the medium through the branch DL3 together with the flow of the medium through opening O2. Consequently, adjusting assembly T2 is also configured to control the flow of medium toward the engine jacket WJ.

In the embodiment of figure 1, the flow of medium through the port P5 connected with branch AL2 is the sum of the flows through the other ports P4, P6, namely the sum of the flow from branch DL3 and of at least a portion of the flow from opening O2.

Therefore, the flow regulating device of adjusting assembly T2 is represented in figure 1 as a three-way valve, without loses of generality, although it may comprise two separate coordinated thermostats.

Preferably, conditioning apparatus CA further comprises another adjusting assembly T3 configured to control the flow of the medium toward the engine jacket WJ.

Like adjusting devices T1, T2, adjusting assembly T3 comprises a flow regulating device, such as a thermostat or a valve, possibly electronically controllable, in particular by control unit ECU.

The delivery line DL includes a further branch DL4 downstream of the flow regulating device of adjusting assembly T3. More precisely, the latter flow regulating device is placed between branches DL2, DL4, in particular downstream of node N3.

Adjusting assembly T3 is configured to control the flow of medium through the branch DL4.

The flow regulating device of adjusting assembly T3 has a port P7 arranged to receive the flow of the medium from branch DL2 and in particular connected to branch DL2.

The flow regulating device of adjusting assembly T3 has another port P8 preferably connected to branch DL4to let the medium flowing toward the engine jacket WJ.

In particular, branch DL4 extends from the latter port P8 to engine jacket WJ.

Conveniently, the same flow regulating device comprises a further port P9.

The additional line AL further comprises a further branch AL3, in particular branching from branch AL1, which connects the same additional line AL to further port P9 and thus to the delivery line DL, such that part of the flow through the additional line AL can bypass the charge air cooler CAC. In other words, port P9 is arranged to receive the flow through branch AL3.

Port P8 selectively communicates with ports P7, P9 to allow the advancing of the sum of the flows from branches DL2, AL3 through the delivery line DL toward the engine jacket WJ.

More precisely, the branch AL3 extends from a node N4 of the additional line AL to the further port P9 of adjusting assembly T3. Node N4 is placed upstream of charge air cooler CAC and conveniently upstream of the flow regulating device of adjusting assembly T2.

Therefore, adjusting assembly T3 is configured to control the flow of the medium through the branch AL3 and consequently the flow of medium toward the charge air cooler CAC, in particular together with the flow of medium through branches DL2, DL3. In the embodiment of figure 1, the flow of medium through the port P8 connected with branch DL4 is the sum of the flows through the other ports P7, P9, namely the sum of the flows from branch DL2, in particular downstream of node N3, and from branch AL3.

Regarding the control of conditioning apparatus CA, control unit ECU is configured to control the flow regulating devices of adjusting assemblies T1, T2, T3, based on information acquired from one or more sensors making part of conditioning apparatus CA itself.

In particular, conditioning apparatus CA comprises one or more of the following sensors or transducers:
- a sensor or transducer S1 configured to detect a first quantity indicative of a temperature of the medium flowing through the return line RL;
- a sensor or transducer S2 configured to detect a second quantity indicative of a temperature of the intake air flow;
- a plurality of sensors or transducers S3, S4 configured to detect a third quantity indicative of a load on the engine (ICE); and
- a sensor or transducer S5 configured to detect the status of the retarder device RD, in particular to sense if the retarder device RD is turned on or turned off.

More precisely, transducer S1 may be coupled to the return line RL, in particular upstream of pumping device PD, for detecting the temperature of the medium flowing there through.

Transducer S2 may be coupled to the charge air line CL, in particular downstream of charge air cooler CAC, for detecting the temperature of the intake air flowing there through.

Transducer S3 may be coupled to engine ICE and preferably arranged to detect a quantity that is suitable for the determination of the brake mean effective pressure (BMEP).

For instance, transducer S3 may be arranged to detect a quantity that is indicative of the amount of fuel e.g. in the air-fuel mixture for engine ICE, e.g. the throttle valve opening angle. BMEP can be determined by control unit ECU from the latter detected quantity as usual in the art.

Transducer S4 is coupled to the after treatment system ATS, more precisely to the SCR catalyst, for detecting the temperature of the exhaust gases.

Sensor S5 may be merely an electric contact, which closes when the retarder device RD is turned on.

Control unit ECU is configured to acquire information from transducers S1, S2 relative to the respective detected quantities and to control the flow regulating devices of adjusting assemblies T1, T2, such that the medium entirely bypasses the conditioning device CD, when the detected quantities are respectively below two corresponding thresholds, which are stored by control unit ECU.

In this manner, the medium is circulated without being cooled and its temperature can progressively increase by absorbing heat from engine ICE and charge air cooler CAC . Here, energy losses to the ambient are minimized. Moreover, engine ICE and the after treatment system ATS can be rapidly warmed up. In particular, the after treatment system ATS warms up faster because engine ICE warms up faster and the charge air is less cooled or not cooled at all. Therefore, the first threshold is set such that lower values represent a cold start condition for engine ICE. Hence, the conditioning device CD is completely bypassed during such a cold start condition, if the temperature of the charge air does not exceed a safety limit value.

Actually, the second threshold for the quantity detected by transducer S2 represents a condition in which cooling the intake air flow becomes highly appropriate, in particular because the temperature thereof starts to be excessively high.

For example, the two thresholds are individually set as critical temperatures, in particular equal to 60° C and to 50° C, respectively. Until the temperatures detected by transducers S1 and S2 do not exceed the critical temperatures, both the flows of medium through openings O1, O2, are not allowed. Accordingly, the medium flowing through return line RL is entirely redirected through bypass line BL.

When at least one of the thresholds is overcome, control unit ECU controls the flow regulating device of adjusting assembly T2 to at least allow a flow of medium through the opening O2 toward the charge air cooler CAC. In particular, if the second threshold is overcome, cooling the intake air becomes more convenient than minimizing energy losses to the ambient.

Similarly, when the first threshold is overcome, the cold start condition ends; therefore, there is no need any more to allow an increase of the temperature of the intake air flow and the second threshold can be disregarded. In other words, the fact that the temperature of the medium is below the first threshold sets a particular operative mode, i.e. a cold start mode, in which the engine ICE is in a cold start condition. Here, control unit ECU verifies that the second threshold is not overcome for instructing the complete bypass of the conditioning device CD. In particular, control unit ECU verifies that the second threshold is not overcome only in the cold start mode. Outside of the cold start mode, a maximum cooling of the charge air is welcome for a better performance of engine ICE from the point of view of fuel consumption.

According to another embodiment, when the first threshold is overcome but the first quantity still remain below a higher third threshold stored within control unit ECU, the flow through the opening O2 is allowed but the flow through the opening O1 stands inhibited by control unit ECU while the second threshold is not overcome.

In this embodiment, the overcoming of the third threshold indicates the end of the cold start condition, whereas the first threshold is used as an additional control parameter to the second threshold for allowing or inhibiting the flow of medium through opening O2. In particular, when the first threshold is overcome, the flow of medium through opening O2 is allowed. Indeed, the overcoming of the first threshold is anyway indicative as the overcoming of the second threshold of the fact that cooling the intake air flow becomes appropriate.

Once the flow of medium is admitted through the openings O1 and O2, control unit ECU may control the adjusting assemblies T1, T2 to cause the mixing of the flows through branch DL3 and AL1 to obtain a flow through branch AL2 with an intermediate temperature set in advance. The intermediate temperature can take any value between the temperatures of the flows through branches DL3 and AL1.

In view of the above, control unit ECU is configured to control the flow regulating devices of adjusting assemblies T1, T2, such that the flows through openings O1, O2 are respectively inhibited and allowed, when the information acquired from transducer S1 indicates that the respective first quantity is between the first and the third threshold.

Control unit ECU is further configured to control the flow regulating devices in the same manner immediately above when the information acquired from transducers S1, S2 indicates that the corresponding quantities are respectively below the first threshold and over the second threshold.

Control unit ECU is further configured to acquire information relative to the third quantity detected by transducer S3 or transducer S4, which is indicative of the load on engine ICE.

Control unit ECU is configured to control the flow regulating device of adjusting assembly T2 to allow the flow of medium from delivery line DL to charge air cooler CAC and to at least limit the flow of medium from opening O2 to charge air cooler CAC under the maximum possible amount of flow when the information acquired from transducers S1, S3 (or S4) indicates that the first and the third quantity are respectively over the abovementioned third threshold and a fourth threshold, being specifically indicative of a condition of high load or effort of engine ICE.

For example, the fourth threshold may be set as a critical temperature of the exhaust gas, e.g. equal to 250° C, or a critical break mean effective pressure, e.g. equal to 10 bar.

More in detail, the flow of medium from opening O2 to charge air cooler CAC is limited based on the information acquired from transducer S3 or S4, such that the amount of flowing medium decreases with the third quantity, in particular until a complete inhibition of the same flow is achieved.

According to the above, the medium flowing through the delivery line DL is drawn and redirected to the charge air cooler CAC to increase the temperature of the intake air flow. On the other hand, a limited amount of flow growing with the load on the engine ICE and coming from opening O2 is also directed to the charge air cooler to avoid an excessive increase of the temperature of the intake air.

Increasing the temperature of the intake air serves to increase the temperature of the exhaust gases, and thus the conversion efficiency of the after treatment system ATS, with minimum impact on fuel consumption.

Clearly, if there is no risk of an excessive increase of temperature of the intake air, i.e. the third quantity is below a further threshold lower than the fourth threshold, control unit ECU controls the flow regulating device of adjusting assembly T2 to completely inhibit the flow from opening O2 to the charge air cooler CAC.

Control unit ECU is further configured to acquire information from sensor S5 to determine if the retarder device RD is turned on.

When the retarder device RD is turned on, it is desirable that the engine jacket WJ receives the medium at the lowest possible temperature, such that the generated heat may be rapidly dispersed.

Here, control unit ECU controls the flow regulating devices such that a flow of medium is allowed from opening O2 to the engine jacket WJ and the flow of medium from opening O2 to the charge air cooler CAC is inhibited. In this manner, the entire coldest medium flowing through opening O2 is completely redirected to engine jacket WJ.

Furthermore, preferably, control unit ECU controls the flow regulating devices such that the flow of medium from opening O1 and from bypass line BL to the engine jacket WJ is inhibited.

In this case, a flow of the medium through the bypass line BL may be still allowed and then entirely redirected through charge air cooler CAC by means of control unit ECU controlling the flow regulating devices (in particular the ones of adjusting assemblies T1, T2, T3) accordingly. Here, control unit ECU controls the flow regulating devices of adjusting assembly T1 to allow the flow of the medium through the bypass line BL and to inhibit the flow of the medium from opening O1 to branch DL2. Control unit ECU is configured to control the flow regulating devices in the latter disclosed manner while the same control unit ECU determines that turbocharger TC provides no boost to the charge air and the retarder device RD is turned on. For example, control unit ECU may be configured to control the operation of turbocharger TC and/ or to determine that turbocharger TC provides no boost by extracting information from a sensor (not shown) for detecting operative conditions of turbocharger TC. When the turbocharger TC provides no boost during the operation of the retarder device RD, the flow of charge air through charge air cooler CAC is used for cooling the medium circulating through the conditioning circuit CC.

With greater detail, the medium flowing through the bypass line BL is admitted through branch DL2, specifically via ports P3 and P2 while port P1 does not communicate with the same ports P3, P2. Then, no flow is admitted through port P7 and accordingly the entire flow of medium flows through branch DL3. The latter flow is directed through branch AL2, specifically via ports P6, P5 while port P4 does not communicate with the same ports P6, P5.

Control unit ECU is further configured to update the values of any of the above-disclosed thresholds, in particular based on the operation of engine ICE.

For example, control unit ECU is further connected to sensors and/or electronic devices for estimating future load conditions of engine ICE. Control unit ECU estimates those future load conditions and adjusts the values of thresholds accordingly. In particular, when the predicted load overcomes a further stored threshold, control unit ECU decreases the values of the first and/or the third threshold.

The operation of conditioning apparatus CA depends on the operation of the adjusting assemblies T1, T2, T3.

Adjusting assembly T1 may allow a flow A1 from opening O1 to engine jacket WJ and/or a flow A2 from the return line LR to the engine jacket WJ, such that conditioning device CD is bypassed.

When flow A1 is not allowed and flow A2 is allowed, the medium circulate through the engine jacket WJ without undergoing any cooling process. This situation is appropriate, e.g. during a warm up condition of the engine ICE, in which a raise of the engine temperature is favorable.

In some embodiments, adjusting assembly T1 may adjust the dimensions of the flows A1, A2, e.g. by partially or completely obstructing the ports P1, P3 of the corresponding flow regulating device. In this manner, the temperature of engine ICE may be controlled over a continuous range of values. This holds for flow A1 independently from the presence of the bypass line BL and of the corresponding further port P3, i.e. independently of the possibility of having flow A2.

Adjusting assembly T2 may allow a flow B1 from opening O2 to charge air cooler CAC and/or a flow B2 from opening O1. When only flow B1 is allowed, the temperature of the charge air is lower than when flow B2 is also allowed. A maximum temperature of the charge air may be obtained allowing only flow B2, especially when flow A1 is not allowed. In this latter case, heat losses to the ambient are minimized, especially in combination with bypassed heat exchanger R, which means that only flow A2 is allowed. This is particularly appropriate during warm up of engine ICE. Furthermore, since the temperature of the charge air influences the temperature of the exhaust gases from engine ICE, adjusting flows B1 and B2 is suitable for controlling the latter temperature, in particular based on the needs of the after treatment system ATS.

In some embodiments, adjusting assembly T2 may adjust the dimensions of the flows like adjusting assembly T1. In this manner, the temperature of the charge air may be controlled over a continuous range of values. This holds for flow B1 independently from the presence of the branch DL3 and of the corresponding further port P6, i.e. independently of the possibility of having flow B2. Flow B2 is admitted only when the after treatment system ATS should be warmed up, e.g. when a quantity indicative of the temperature thereof is detected by a not shown transducer to be below a corresponding threshold.

Adjusting assembly T3 may allow a flow C1 from opening O1 to engine jacket WJ and/or a flow C2 from opening O2 to engine jacket WJ. When the flow C1 is not allowed, the flow from opening O1 might be redirected to charge air cooler CAC. When the flow C2 is allowed, some of the flow from opening O2 is used for an extra cooling of engine ICE, while charge air cooling CAC is supplied with less medium. This condition is appropriate when high engine cooling is required, e.g. during engine braking, while heat rejection of the charge air is low.

Indeed, conditioning apparatus CA may be used for conditioning the retarder device RD associated to engine ICE and having an own jacket connected to engine jacket WJ, e.g. through the conditioning circuit CC, to receive the medium. In this case, a lower temperature of the medium is appropriate during the operation of the retarder device. Here, the flow C2 is advantageously allowed (preferably maximized) during such an operation.

In some embodiments, adjusting assembly T3 may adjust the dimensions of the flows like adjusting assemblies T1, T2. In this manner, the control of both the temperature of the charge air and engine ICE may be controlled with an additional degree of freedom. In some other embodiments, the flow C1 may be always allowed in full, which means that port P7 remains always unobstructed.

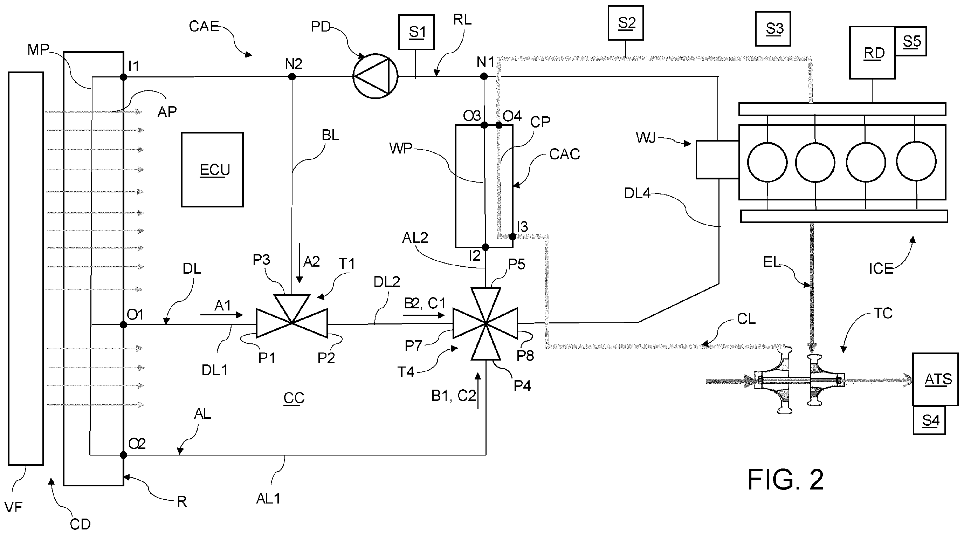

Figure 2 shows a conditioning apparatus CAE according to a similar embodiment to that shown in figure 1. In view of such a similarity, conditioning apparatus CAE will be described only insofar it differs from conditioning apparatus CA. Where possible, the same reference symbols will be used to indicate equivalent components.

Conditioning apparatus CAE differs from conditioning apparatus CA for the absence of branches DL3 and AL3 and for the replacement of the adjusting assemblies T2, T3 with an adjusting assembly T4. Therefore, conditioning apparatus CAE shows a reduced number of components and is in this sense simpler than conditioning apparatus CA.

The adjusting assembly T4 has a flow regulating device with four ports having the same role of ports P4, P5, P7, P8 and thus indicated with the same reference symbols. Ports P4, P7 respectively receive flows from branches AL2, DL2, whereas ports P5, P8 respectively let the medium flowing toward charge air cooler CAC and engine jacket WJ.

Port P8 selectively communicates with ports P4, P7 to allow the advancing of at least a portion of the sum of the flows from opening O2 and branch DL2 through branch DL4 toward the engine jacket WJ.

The flow regulating device of adjusting assembly T4 is configured to control the flows of the medium through opening O2 and through branch DL2. Moreover, the same flow regulating device controls the flows toward charge air cooling device CAC and engine jacket WJ as respective portions of the sum of the flows received from opening O2 and branch DL2.

The latter flow regulating device is configured to control the dimensions of the latter portions.

In particular, the flow regulating device includes a four way control valve configured to control the above four flows.

Ports P4, P5, P7, P8 communicates to each other in a selective manner. For example, the flow regulating device is configured to partially or totally obstruct each of ports P4, P5, P7, P8.

The operation of the conditioning apparatus CAE is similar to that of conditioning apparatus CA. The only difference is relative to the operation of the adjusting assembly T4, in replacement of adjusting assemblies T2, T3.

The operation of the adjusting assembly T4 is typical of the common four way control valves; therefore, the latter operation will not be described in detail.

Adjusting assembly T4 allows the four flows B1, B2, C1, C2 as the combination of adjusting assemblies T2, T3.

In the following, three methods for controlling or operating the conditioning apparatuses CA, CAE will be described. Those methods may be carried out by control unit ECU in both the conditioning apparatuses CA, CAE.

A first method according to the invention, here indicated for simplicity as cold start mode, comprises the following steps:
- acquiring first information relative to the first quantity indicative of the temperature of the medium flowing through the return line RL;
- acquiring second information relative to the second quantity indicative of the temperature of the intake air flow;
- controlling the flow regulating devices of adjusting assemblies T1, T2, such that the medium entirely bypasses the conditioning device CD, when the first and second information indicate that the first and the second quantity are respectively below the first threshold and the second threshold;
- preferably controlling the flow regulating devices of adjusting assemblies T1, T2, such that the flow A1 and the flow B1 are respectively inhibited and allowed, when the first information indicates that the first quantity is between the first threshold and the third threshold; and
- preferably controlling the flow regulating devices of adjusting assemblies T1, T2, such that the flow A1 and the flow B1 are respectively inhibited and allowed, when the first and second information indicate that the first and the second quantity are respectively below the first threshold and over the second threshold.

A second method according to the invention, here indicated for simplicity as thermal management mode, comprises the following steps:
- acquiring first information relative to the first quantity indicative of the temperature of the medium flowing through the return line RL;
- acquiring third information relative to the third quantity indicative of the load on engine ICE;
- controlling the flow regulating device of adjusting assembly T2 to allow the flow B2 and to at least limit the flow B1 under the maximum possible amount of flow when the first and the third information indicate that the first and the third quantity respectively are over the third threshold and below a fourth threshold.

Preferably, the flow B1 is limited based on the third information, such that the amount of the flowing medium decreases with the third quantity, in particular until a complete inhibition of the flow B1 is achieved.

A third method according to the invention, here indicated for simplicity as retarder mode, comprises the following steps:
- determining if the retarder device RD is turned on or turned off;
- controlling the flow regulating devices to allow the flow C2 when the retarder device RD is determined to be turned on;
- controlling the flow regulating devices to inhibit the flow B1 when the retarder device is determined to be turned on; and
- preferably controlling the regulating devices to inhibit the flow C1 and/or the flow A1 when the retarder device is determined to be turned on.

In view of the foregoing, the advantages of conditioning apparatuses CA, CAE and of the methods according to the invention are apparent.

In particular, a very high use flexibility of the conditioning apparatuses CA, CAE is apparent due to the possibility of controlling the temperatures of the charge air and of engine ICE based on the operating conditions of the latter.

Especially, conditioning apparatus CAE allows a complete bypass of charge air cooler CAC to maximize cooling of engine ICE, in particular during engine braking, and of possible associated devices like a retarder device. When no boost is provided by turbocharger TC, the charge air cooler CAC can receive the flow of medium from the bypass line in order to cool down the same medium using the charge air flow as an additional cooling medium.

A single heat exchanger with two outlets, i.e. openings O1, O2, is provided for cooling just one medium to different temperature levels, which allows for the flexible cooling of both the charge air and engine ICE.

The energy generated by engine ICE in the form of heat can be kept within the conditioning apparatuses CA, CAC during a cold start of engine by inhibiting both flows A1 and B1. This permits a fast warm up of engine ICE.

The cooling capacity of conditioning device DC is fully exploited by redirecting the colder portion of the medium toward the charge air cooler CAC. According to known solutions, on the other hand, the cooling capacity is maintained high to address an extra cooling need given by engine braking, but this high cooling capacity cannot be exploited during normal operation of the engine.

Moreover, the complete cooling capacity of conditioning device CD can be exploited to maximize cooling of the charge air when high boost is appropriate.

Preferably, when conditioning apparatuses CA, CAC are used for cooling the retarder device RD, such a device can have a higher braking power than usual due to the higher cooling capacities of conditioning apparatuses CA, CAE.

Furthermore, conditioning apparatuses CA, CAE essentially have components that are already used in known apparatuses, though in a less flexible manner. Therefore, conditioning apparatuses CA, CAE are simple to be carried out in a cost effective manner.

With respect to known apparatuses, the number of components is even reduced due to the connection of the heat exchanger R and charge air cooler CAC to the same conditioning circuit CC. In particular, indirect cooling of the charge air is reached without the need of a further heat exchanger.

Finally, it is clear that modifications can be made to the described conditioning apparatuses CA, CAE, which do not extend beyond the scope of protection defined by the claims.

For example, the embodiments of figures 1 and 2 may be combined into an embodiment where all the adjusting assemblies T2, T3, T4 are present. Adjusting assembly T1 may be entirely absent if at least one of adjusting assembly T3 and T4 is present. As well, other components disclosed as preferred components have to be regarded as optional and thus removable.

Moreover, the scheme of the lines of conditioning circuit CC may be different from that illustrated in figures 1 and 2. Eventually, the conditioning device CD might be different from a common heat exchanger and might include, for instance, a plurality of communicating refrigerated cells.

## Claims

1. A conditioning apparatus (CA; CAE) for an engine (ICE) comprising:
- a conditioning device (CD) for cooling a medium to a plurality of temperature levels, said conditioning device (CD) having a first opening (I1) for receiving the medium at a first temperature level and a second opening (O1) to release the medium at a second temperature level lower than the first temperature level;
- a delivery line (DL) connected to the second opening (O1) to bring the medium in thermal contact with the engine (ICE) at a heat exchange region (WJ) and comprising first adjusting means (T1) to control a first flow (A1) of the medium from the second opening (O1) toward the heat exchange region (WJ);
- a return line (RL) connected to the first opening (I1) to supply the conditioning device (CD) with the medium brought in thermal contact with the engine (ICE) at the heat exchanging region (WJ); and
- a charge air cooler (CAC) for cooling an intake air flow of the engine (ICE) by means of the medium;
wherein the conditioning device (CD) has a third opening (O2) to release the medium at a third temperature level lower than the second temperature level, said apparatus comprising an additional line (AL) to conduct the medium from the third opening (O2) to the return line (RL);
the additional line (AL) passing through the charge air cooler (CAC) and comprising second adjusting means (T2; T4) to control a second flow (B1; B1, C2) of the medium from the third opening (O2) toward the charge air cooler (CAC),
the conditioning apparatus (CA, CAE) further comprising a first bypass line (BL) that connects the return line (RL) to the delivery line (DL), such that the medium flowing through the return line (RL) is allowed to bypass the conditioning device (CD);
wherein said first adjusting means (T1) comprise a first flow regulating device configured to control said first flow (A1) and a third flow (A2) of the medium through the first bypass line (BL),
**characterised in that** the delivery line (DL) comprises a first branch (DL3; DL2) connecting to the additional line (AL) upstream of the charge air cooler (CAC) according to the direction of the second flow (B1; B1, C2);
and wherein said second adjusting means (T2; T4) comprise a second flow regulating device configured to control the flow of medium from the third opening (O2) to the charge air cooling device (CAC) and a fourth flow (B2) of the medium from the first branch (DL3; DL2) to the air charge cooler (CAC).

2. The conditioning apparatus of claim 1, further comprising a first transducer (S1) configured to detect a first quantity indicative of a temperature of the medium flowing through the return line (RL), a second transducer (S2) configured to detect a second quantity indicative of a temperature of the intake air flow, and a control unit (ECU) storing a first threshold and a second threshold;
the control unit being configured to
- acquire from the first transducer (T1) first information relative to the first quantity;
- acquire from the second transducer (T2) second information relative to the second quantity;
- control the first and the second flow regulating device, such that the medium entirely bypasses the conditioning device (CD), when the first and second information indicate that the first and the second quantity are respectively below the first threshold and the second threshold.

3. The conditioning apparatus of claim 1 or 2, further comprising a first transducer (S1) configured to detect a first quantity indicative of a temperature of the medium flowing through the return line (RL), a third transducer (S3, S4) configured to detect a third quantity indicative of a load on the engine (ICE), and a control unit (ECU) storing a third threshold and a fourth threshold;
the control unit (ECU) being configured to
- acquire first information relative to a first quantity indicative of a temperature of the medium flowing through the return line (RL);
- acquiring third information relative to a third quantity indicative of a load on the engine (ICE);
- controlling the second flow regulating device to allow the fourth flow (B2) and to at least limit the second flow (B1) under the maximum possible amount of flow when the first and the third information indicate that the first and the third quantity respectively are over the third threshold and below the fourth threshold.

4. The conditioning apparatus of any of the foregoing claims, wherein the delivery line (DL) comprises a second branch (DL4) connecting to the additional line (AL) upstream of the charge air cooler (CAC) according to the direction of the second flow (B1) and connecting said first branch (DL2) to said heat exchange region (WJ);
said apparatus comprising a third flow regulating device, which is defined by the second flow regulating device and is configured to control a fifth flow (C1) of the medium from said first branch (DL2) to said second branch (DL4) and a sixth flow (C2) of the medium from the additional line (AL1) to said second branch (DL4).

5. The conditioning apparatus of any of the foregoing claims, wherein the delivery line (DL) comprises a third branch (DL2) and a third flow regulating device (T3) configured to control a fifth flow (C1) of the medium from the third branch (DL2) toward the heat exchange region (WJ);
said apparatus comprising a second bypass line (AL3) that connects the additional line (AL) to the third branch (DL2), such that the medium flowing through the additional line (AL) is allowed to bypass said charge air cooler (CAC);
wherein the third flow regulating device (T3) is further configured to control a sixth flow (C2) of the medium from the second bypass line (AL3) toward the heat exchange region (WJ) .

6. The conditioning apparatus of claim 5 or 6, further comprising a sensor (S5) connectable to a retarder device (RD) coupled to the engine (ICE) for sensing if the retarder device is turned on or turned off and a further control unit (ECU) configured to
- acquire further information from the sensor to determine if the retarder device is turned on;
- controlling the third flow regulating device to allow the sixth flow (C2) when the retarder device (RD) is determined to be turned on;
- controlling the second flow regulating device to inhibit the flow of medium from the third opening (O2) to the charge air cooling device (CAC) when the retarder device (RD) is determined to be turned on.

7. A method for controlling a conditioning apparatus according to any of the preceding claims, the method comprising
- acquiring first information relative to a first quantity indicative of a temperature of the medium flowing through the return line (RL);
- acquiring second information relative to a second quantity indicative of a temperature of the intake air flow;
- controlling the first and the second flow regulating device, such that the medium entirely bypasses the conditioning device (CD), when the first and second information indicate that the first and the second quantity are respectively below a first threshold and a second threshold.

8. The method of claim 7, further comprising
- controlling the first and the second flow regulating device, such that the first flow (A1) and the second flow (B1) are respectively inhibited and allowed, when the first information indicates that the first quantity is between the first threshold and a third threshold larger than the first threshold.

9. The method of claim 7 or 8, further comprising
- controlling the first and the second flow regulating device, such that the first flow (A1) and the second flow (B1) are respectively inhibited and allowed, when the first and second information indicate that the first and the second quantity are respectively below the first threshold and over the second threshold.

10. A method for controlling a conditioning apparatus according to any of the preceding claims, the method comprising
- acquiring first information relative to a first quantity indicative of a temperature of the medium flowing through the return line (RL);
- acquiring third information relative to a third quantity indicative of a load on the engine (ICE);
- controlling the second flow regulating device to allow the fourth flow (B2) and to at least limit the second flow (B1) under the maximum possible amount of flow when the first and the third information indicate that the first and the third quantity respectively are over a third threshold and below a fourth threshold.

11. The method of claim 10, wherein the second flow is limited based on the third information, such that the amount of the flowing medium decreases with the third quantity, in particular until a complete inhibition of the second flow is achieved.

12. A method for controlling a conditioning apparatus according to claim 10 or 11, the method comprising:
- determining if a retarder device (RD) coupled to the engine (ICE) is turned on or turned off;
- controlling the third flow regulating device to allow the sixth flow (C2) when the retarder device (RD) is determined to be turned on;
- controlling the second flow regulating device to inhibit the flow of medium from the third opening (O2) to the charge air cooling device (CAC) when the retarder device (RD) is determined to be turned on.

13. The method of claim 12, further comprising
- controlling the third flow regulating device and/or the first flow regulating device to respectively inhibit the fifth flow (C1) and/or the first flow (A1) when the retarder device (RD) is determined to be turned on.

## Patentansprüche

1. Kühlungsvorrichtung (CA; CAE) für eine Kraftmaschine (ICE), die Folgendes umfasst:
- eine Kühleinrichtung (CD) zum Kühlen eines Mediums auf mehrere Temperaturniveaus, wobei die Kühleinrichtung (CD) eine erste Öffnung (I1) zum Aufnehmen des Mediums auf einem ersten Temperaturniveau und eine zweite Öffnung (01) zum Freisetzen des Mediums auf einem zweiten Temperaturniveau, das niedriger ist als das erste Temperaturniveau, aufweist;
- eine Förderleitung (DL), die mit der zweiten Öffnung (01) verbunden ist, um das Medium in einem Wärmetauschbereich (WJ) in thermischen Kontakt mit der Kraftmaschine (ICE) zu bringen, und erste Einstellmittel (T1) umfasst, um einen ersten Durchfluss (A1) des Mediums von der zweiten Öffnung (01) in Richtung des Wärmetauschbereichs (WJ) zu steuern;
- eine Rückführleitung (RL), die mit der ersten Öffnung (I1) verbunden ist, um die Kühleinrichtung (CD) mit dem Medium, das in dem Wärmetauschbereich (WJ) in thermischen Kontakt mit der Kraftmaschine (ICE) gebracht worden ist, zu versorgen; und
- einen Ladeluftkühler (CAC) zum Kühlen eines Ansaugluftstromes der Kraftmaschine (ICE) mittels des Mediums,
wobei die Kühleinrichtung (CD) eine dritte Öffnung (O2) aufweist, um das Medium auf einem dritten Temperaturniveau, das niedriger ist als das zweite Temperaturniveau, freizusetzen, wobei die Vorrichtung eine zusätzliche Leitung (AL) umfasst, um das Medium von der dritten Öffnung (O2) zu der Rückführleitung (RL) zu führen;
wobei die zusätzliche Leitung (AL) durch den Ladeluftkühler (CAC) verläuft und zweite Einstellmittel (T2; T4) umfasst, um einen zweiten Durchfluss (B1, B1, C2) des Mediums von der dritten Öffnung (O2) in Richtung des Ladeluftkühlers (CAC) zu steuern,
wobei die Kühlungsvorrichtung (CA, CAE) ferner eine erste Umgehungsleitung (BL) umfasst, die die Rückführleitung (RL) mit der Förderleitung (DL) derart verbindet, dass das Medium, das durch die Rückführleitung (RL) strömt, die Kühleinrichtung (CD) umgehen kann;
wobei die ersten Einstellmittel (T1) eine erste Durchfluss-Regulierungseinrichtung umfasst, die konfiguriert ist, den ersten Durchfluss (A1) und einen dritten Durchfluss (A2) des Mediums durch die erste Umgehungsleitung (BL) zu steuern,
**dadurch gekennzeichnet, dass** die Förderleitung (DL) einen ersten Zweig (DL3; DL2) umfasst, der mit der zusätzlichen Leitung (AL) entsprechend der Richtung des zweiten Durchflusses (B1; B1, C2) stromaufwärts des Ladeluftkühlers (CAC) verbunden ist,
wobei die zweiten Einstellmittel (T2; T4) eine zweite Durchflussregulierungseinrichtung umfassen, die konfiguriert ist, den Durchfluss des Mediums von der dritten Öffnung (O2) zu dem Ladeluftkühler (CAC) und einen vierten Durchfluss (B2) des Mediums von dem ersten Zweig (DL3; DL2) zu dem Ladeluftkühler (CAC) zu steuern.

2. Kühlungsvorrichtung nach Anspruch 1, die ferner einen ersten Umsetzer (S 1), der konfiguriert ist, eine erste Größe zu detektieren, die eine Temperatur des Mediums, das durch die Rückführleitung (RL) fließt, anzeigt, einen zweiten Umsetzer (S2), der konfiguriert ist, eine zweite Größe zu detektieren, die eine Temperatur des Ansaugluftstromes anzeigt, und eine Steuereinheit (ECU), die einen ersten Schwellenwert und einen zweiten Schwellenwert speichert, umfasst;
wobei die Steuereinheit konfiguriert ist:
- von dem ersten Umsetzer (T1) erste Informationen bezüglich der ersten Größe zu erfassen;
- von dem zweiten Umsetzer (T2) zweite Informationen bezüglich der zweiten Größe zu erfassen;
- die erste und die zweite Durchflussregulierungseinrichtung derart zu steuern, dass das Medium die Kühleinrichtung (CD) vollständig umgeht, wenn die ersten und zweiten Informationen anzeigen, dass die erste und die zweite Größe unter dem ersten Schwellenwert bzw. dem zweiten Schwellenwert liegen.

3. Kühlungsvorrichtung nach Anspruch 1 oder 2, die ferner einen ersten Umsetzer (S 1), der konfiguriert ist, eine erste Größe zu detektieren, die eine Temperatur des Mediums, das durch die Rückführleitung (RL) fließt, anzeigt, einen dritten Umsetzer (S3, S4), der konfiguriert ist, eine dritte Größe zu detektieren, die eine Last auf der Kraftmaschine (ICE) anzeigt, und eine Steuereinheit (ECU), die einen dritten Schwellenwert und einen vierten Schwellenwert speichert, umfasst;
wobei die Steuereinheit (ECU) konfiguriert ist:
- erste Informationen bezüglich einer ersten Größe, die eine Temperatur des Mediums, das durch die Rückführleitung (RL) fließt, anzeigt, zu erfassen;
- dritte Informationen bezüglich einer dritten Größe, die eine Last an die Kraftmaschine (ICE) anzeigt, zu erfassen;
- die zweite Durchflussregulierungseinrichtung zu steuern, um den vierten Durchfluss (B2) zu erlauben und um den zweiten Durchfluss (B 1) zumindest unter die maximal mögliche Durchflussmenge zu begrenzen, wenn die ersten und die dritten Informationen anzeigen, dass die erste und die dritte Größe oberhalb des dritten Schwellenwerts bzw. unterhalb des vierten Schwellenwerts liegen.

4. Kühlungsvorrichtung nach einem der vorhergehenden Ansprüche, wobei die Förderleitung (DL) einen zweiten Zweig (DL4) umfasst, der mit der zusätzlichen Leitung (AL) entsprechend der Richtung des zweiten Durchflusses (D1) stromaufwärts des Ladeluftkühlers (CAC) verbunden ist, und den ersten Zweig (DL2) mit dem Wärmetauschbereich (WJ) verbindet,
wobei die Vorrichtung eine dritte Durchflussregulierungseinrichtung umfasst, die durch die zweite Durchflussregulierungseinrichtung definiert ist und konfiguriert ist, einen fünften Durchfluss (C1) des Mediums von dem ersten Zweig (DL2) zu dem zweiten Zweig (DL4) und einen sechsten Durchfluss (C2) des Mediums von der zusätzlichen Leitung (AL) zu dem zweiten Zweig (DL4) zu steuern.

5. Kühlungsvorrichtung nach einem der vorhergehenden Ansprüche, wobei die Förderleitung (DL) einen dritten Zweig (DL2) und eine dritte Durchflussregulierungseinrichtung (T3) umfasst, die konfiguriert ist, einen fünften Durchfluss (C1) des Mediums von dem dritten Zweig (DL2) in Richtung des Wärmetauschbereichs (WJ) zu steuern;
wobei die Vorrichtung eine zweite Umgehungsleitung (AL3) umfasst, die die zusätzliche Leitung (AL) mit dem dritten Zweig (DL2) derart verbindet, dass das Medium, das durch die zusätzliche Leitung (AL) fließt, den Ladeluftkühler (CAC) umgehen kann;
wobei die dritte Durchflussregulierungseinrichtung (T3) ferner konfiguriert ist, einen sechsten Durchfluss (C2) des Mediums von der zweiten Umgehungsleitung (AL3) in Richtung des Wärmetauschbereichs (WJ) zu steuern.

6. Kühlungsvorrichtung nach Anspruch 5 oder 6, die ferner einen Sensor (S5), der mit einer Retarder-Vorrichtung (RD), die mit der Kraftmaschine (ICE) gekoppelt ist, verbunden werden kann, um zu erfassen, ob die Retarder-Vorrichtung (RD) eingeschaltet oder ausgeschaltet ist, und eine weitere Steuereinheit (ECU) umfasst, die konfiguriert ist:
- weitere Informationen von dem Sensor zu erfassen, um zu bestimmen, ob die Retarder-Vorrichtung eingeschaltet ist;
- die dritte Durchflussregulierungseinrichtung zu steuern, den sechsten Durchfluss (C2) zu erlauben, wenn bestimmt worden ist, dass die Retarder-Vorrichtung (RD) eingeschaltet ist;
- die zweite Durchflussregulierungseinrichtung zu steuern, den Durchfluss des Mediums von der dritten Öffnung (O2) zu dem Ladeluftkühler (CAC) zu unterbinden, wenn bestimmt worden ist, dass die Retarder-Vorrichtung (RD) eingeschaltet ist.

7. Verfahren zum Steuern einer Kühlungsvorrichtung nach einem der vorhergehenden Ansprüche, wobei das Verfahren Folgendes umfasst:
- Erfassen erster Informationen bezüglich einer ersten Größe, die eine Temperatur des Mediums, das durch die Rückführleitung (RL) fließt, anzeigt;
- Erfassen zweiter Informationen bezüglich einer zweiten Größe, die eine Temperatur des Ansaugluftstromes anzeigt;
- Steuern der ersten und zweiten Durchflussregulierungseinrichtung derart, dass das Medium die Kühleinrichtung (SD) vollständig umgeht, wenn die ersten und zweiten Informationen anzeigen, dass die erste und die zweite Größe unter einem ersten bzw. zweiten Schwellenwert liegen.

8. Verfahren nach Anspruch 7, das ferner Folgendes umfasst:
- Steuern der ersten und der zweiten Durchflussregulierungseinrichtung derart, dass der erste Durchfluss (A1) und der zweite Durchfluss (B1) unterbunden bzw. erlaubt werden, wenn die ersten Informationen anzeigen, dass die erste Größe zwischen dem ersten Schwellenwert und einem dritten Schwellenwert, der größer ist als der erste Schwellenwert, liegt.

9. Verfahren nach Anspruch 7 oder 8, das ferner Folgendes umfasst:
- Steuern der ersten und der zweiten Durchflussregulierungseinrichtung derart, dass der erste Durchfluss (A1) und der zweite Durchfluss (B1) unterbunden bzw. erlaubt werden, wenn die ersten und die zweiten Informationen anzeigen, dass die erste und die zweite Größe unter dem ersten Schwellenwert bzw. über dem zweiten Schwellenwert liegen.

10. Verfahren zum Steuern einer Kühlungsvorrichtung nach einem der vorhergehenden Ansprüche, wobei das Verfahren Folgendes umfasst:
- Erfassen erster Informationen bezüglich einer ersten Größe, die eine Temperatur des Mediums, das durch die Rückführleitung (RL) fließt, anzeigt;
- Erfassen dritter Informationen bezüglich einer dritten Größe, die eine Last auf der Kraftmaschine (ICE) anzeigt;
- Steuern der zweiten Durchflussregulierungseinrichtung, um den vierten Durchfluss (B2) zu erlauben, und um den zweiten Durchfluss (B1) zumindest unter die maximal mögliche Durchflussmenge zu begrenzen, wenn die ersten und die dritten Informationen anzeigen, dass die erste und die dritte Größe über dem dritten Schwellenwert bzw. unter dem vierten Schwellenwert liegen.

11. Verfahren nach Anspruch 10, wobei der zweite Durchfluss basierend auf den dritten Informationen derart begrenzt wird, dass die Menge des durchfließenden Mediums mit der dritten Größe abnimmt, insbesondere bis eine vollständige Unterbindung des zweiten Durchflusses erreicht wird.

12. Verfahren zum Steuern einer Kühlungsvorrichtung nach Anspruch 10 oder 11, wobei das Verfahren Folgendes umfasst:
- Bestimmen, ob eine Retarder-Vorrichtung (RD), die an die Kraftmaschine (ICE) gekoppelt ist, eingeschaltet oder ausgeschaltet ist;
- Steuern der dritten Durchflussregulierungseinrichtung, um den sechsten Durchfluss (C2) zu erlauben, wenn bestimmt worden ist, dass die Retarder-Vorrichtung (RD) eingeschaltet ist;
- Steuern der zweiten Durchflussregulierungseinrichtung, um den Durchfluss des Mediums von der dritten Öffnung (O2) zu dem Ladeluftkühler (CAC) zu unterbinden, wenn bestimmt worden ist, dass die Retarder-Vorrichtung (RD) eingeschaltet ist.

13. Verfahren nach Anspruch 12, das ferner Folgendes umfasst:
- Steuern der dritten Durchflussregulierungseinrichtung und/oder der ersten Durchflussregulierungseinrichtung, um jeweils den fünften Durchfluss (C1) und/oder den ersten Durchfluss (A1) zu unterbinden, wenn bestimmt worden ist, dass die Retarder-Vorrichtung (RD) eingeschaltet ist.

## Revendications

1. Appareil de climatisation (CA ; CAE) pour un moteur (ICE) comprenant :
- un dispositif de climatisation (CD) pour refroidir un milieu à une pluralité de niveaux de température, ledit dispositif de climatisation (CD) comportant une première ouverture (I1) pour recevoir le milieu à un premier niveau de température et une deuxième ouverture (01) pour libérer le milieu à un deuxième niveau de température inférieur au premier niveau de température ;
- une conduite de distribution (DL) reliée à la deuxième ouverture (01) pour mettre le milieu en contact thermique avec le moteur (ICE) au niveau d'une région d'échange de chaleur (WJ) et comprenant des premiers moyens d'ajustement (T1) pour commander un premier écoulement (A1) du milieu depuis la deuxième ouverture (01) vers la région d'échange de chaleur (WJ) ;
- une conduite de retour (RL) reliée à la première ouverture (I1) pour fournir au dispositif de climatisation (CD) le milieu mis en contact thermique avec le moteur (ICE) au niveau de la région d'échange de chaleur (WJ) ; et
- un refroidisseur d'air de suralimentation (CAC) pour refroidir un écoulement d'air d'admission du moteur (ICE) au moyen du milieu ;
dans lequel le dispositif de climatisation (CD) comporte une troisième ouverture (O2) pour libérer le milieu à un troisième niveau de température inférieur au deuxième niveau de température, ledit appareil comprenant une conduite supplémentaire (AL) pour conduire le milieu de la troisième ouverture (O2) à la conduite de retour (RL) ;
la conduite supplémentaire (AL) passant à travers le refroidisseur d'air de suralimentation (CAC) et comprenant des deuxièmes moyens d'ajustement (T2 ; T4) pour commander un deuxième écoulement (B1 ; B1, C2) du milieu depuis la troisième ouverture (O2) vers le refroidisseur d'air de suralimentation (CAC),
l'appareil de climatisation (CA, CAE) comprenant en outre une première conduite de contournement (BL) qui relie la conduite de retour (RL) à la conduite de distribution (DL), de sorte que le milieu s'écoulant à travers la conduite de retour (RL) soit autorisé à contourner le dispositif de climatisation (CD) ;
dans lequel lesdits premiers moyens d'ajustement (T1) comprennent un premier dispositif de régulation d'écoulement configuré pour commander ledit premier écoulement (A1) et un troisième écoulement (A2) du milieu à travers la première conduite de contournement (BL),
**caractérisé en ce que**
la conduite de distribution (DL) comprend une première branche (DL3 ; DL2) reliant la conduite supplémentaire (AL) en amont du refroidisseur d'air de suralimentation (CAC) selon la direction du deuxième écoulement (B1 ; B1, C2) ;
et dans lequel lesdits deuxièmes moyens d'ajustement (T2 ; T4) comprennent un deuxième dispositif de régulation d'écoulement configuré pour commander l'écoulement du milieu depuis la troisième ouverture (O2) vers le refroidisseur d'air de suralimentation (CAC) et un quatrième écoulement (B2) du milieu depuis la première branche (DL3 ; DL2) vers le refroidisseur d'air de suralimentation (CAC).

2. Appareil de climatisation selon la revendication 1, comprenant en outre un premier transducteur (S1) configuré pour détecter une première quantité indicative d'une température du milieu s'écoulant à travers la conduite de retour (RL), un deuxième transducteur (S2) configuré pour détecter une deuxième quantité indicative d'une température de l'écoulement d'air d'admission, et une unité de commande (ECU) stockant un premier seuil et un deuxième seuil ;
l'unité de commande étant configurée pour
- acquérir, depuis le premier transducteur (T1), des premières informations relatives à la première quantité ;
- acquérir, depuis le deuxième transducteur (T2), des deuxièmes informations relatives à la deuxième quantité ;
- commander les premier et deuxième dispositifs de régulation d'écoulement, de sorte que le milieu contourne complètement le dispositif de climatisation (CD), lorsque les premières et deuxièmes informations indiquent que les première et deuxième quantités sont inférieures respectivement au premier seuil et au deuxième seuil.

3. Appareil de climatisation selon la revendication 1 ou 2, comprenant en outre un premier transducteur (S1) configuré pour détecter une première quantité indicative d'une température du milieu s'écoulant à travers la conduite de retour (RL), un troisième transducteur (S3, S4) configuré pour détecter une troisième quantité indicative d'une charge sur le moteur (ICE), et une unité de commande (ECU) stockant un troisième seuil et un quatrième seuil ;
l'unité de commande (ECU) étant configurée pour
- acquérir des premières informations relatives à une première quantité indicative d'une température du milieu s'écoulant à travers la conduite de retour (RL) ;
- acquérir des troisièmes informations relatives à une troisième quantité indicative d'une charge sur le moteur (ICE) ;
- commander au deuxième dispositif de régulation d'écoulement d'autoriser le quatrième écoulement (B2) et d'au moins limiter le deuxième écoulement (B1) au-dessous de la quantité d'écoulement possible maximale lorsque les premières et troisièmes informations indiquent que les première et troisième quantités sont respectivement supérieure au troisième seuil et inférieure au quatrième seuil.

4. Appareil de climatisation selon l'une quelconque des revendications précédentes, dans lequel la conduite de distribution (DL) comprend une deuxième branche (DL4) reliant la conduite supplémentaire (AL) en amont du refroidisseur d'air de suralimentation (CAC) en fonction de la direction du deuxième écoulement (B1) et reliant ladite première branche (DL2) à ladite région d'échange de chaleur (WJ) ;
ledit appareil comprenant un troisième dispositif de régulation d'écoulement, qui est défini par le deuxième dispositif de régulation d'écoulement et qui est configuré pour commander un cinquième écoulement (C1) du milieu depuis ladite première branche (DL2) vers ladite deuxième branche (DL4) et un sixième écoulement (C2) du milieu depuis la conduite supplémentaire (AL1) vers ladite deuxième branche (DL4).

5. Appareil de climatisation selon l'une quelconque des revendications précédentes, dans lequel la conduite de distribution (DL) comprend une troisième branche (DL2) et un troisième dispositif de régulation d'écoulement (T3) configuré pour commander un cinquième écoulement (C1) du milieu depuis la troisième branche (DL2) vers la région d'échange de chaleur (WJ) ;
ledit appareil comprenant une deuxième conduite de contournement (AL3) qui relie la conduite supplémentaire (AL) à la troisième branche (DL2), de sorte que le milieu s'écoulant à travers la conduite supplémentaire (AL) soit autorisé à contourner ledit refroidisseur d'air de suralimentation (CAC) ;
dans lequel le troisième dispositif de régulation d'écoulement (T3) est en outre configuré pour commander un sixième écoulement (C2) du milieu depuis la deuxième conduite de contournement (AL3) vers la région d'échange de chaleur (WJ).

6. Appareil de climatisation selon la revendication 5 ou 6, comprenant en outre un capteur (S5) pouvant être relié à un dispositif ralentisseur (RD) couplé au moteur (ICE) pour détecter si le dispositif ralentisseur est activé ou désactivé et une autre unité de commande (ECU) configurée pour
- acquérir d'autres informations depuis le capteur pour déterminer si le dispositif ralentisseur est activé ;
- commander au troisième dispositif de régulation d'écoulement d'autoriser le sixième écoulement (C2) lorsqu'il est déterminé que le dispositif ralentisseur (RD) est activé
- commander au deuxième dispositif de régulation d'écoulement d'interdire l'écoulement du milieu depuis la troisième ouverture (O2) vers le refroidisseur d'air de suralimentation (CAC) lorsqu'il est déterminé que le dispositif ralentisseur (RD) est activé.

7. Méthode de commande d'un appareil de climatisation selon l'une quelconque des revendications précédentes, la méthode comprenant
- l'acquisition de premières informations relatives à une première quantité indicative d'une température du milieu s'écoulant à travers la conduite de retour (RL) ;
- l'acquisition de deuxièmes informations relatives à une deuxième quantité indicative d'une température de l'écoulement d'air d'admission ;
- la commande des premier et deuxième dispositifs de régulation d'écoulement de sorte que le milieu contourne complètement le dispositif de climatisation (CD), lorsque les premières et deuxièmes informations indiquent que les première et deuxième quantités sont inférieures respectivement à un premier seuil et à un deuxième seuil.

8. Méthode selon la revendication 7, comprenant en outre
- la commande des premier et deuxième dispositifs de régulation d'écoulement, de sorte que le premier écoulement (A1) et le deuxième écoulement (B1) soient respectivement interdit et autorisé, lorsque les premières informations indiquent que la première quantité est entre le premier seuil et un troisième seuil supérieur au premier seuil.

9. Méthode selon la revendication 7 ou 8, comprenant en outre
- la commande des premier et deuxième dispositifs de régulation d'écoulement, de sorte que le premier écoulement (A1) et le deuxième écoulement (B1) soient respectivement interdit et autorisé, lorsque les premières et deuxièmes informations indiquent que les première et deuxième quantités sont respectivement inférieure au premier seuil et supérieure au deuxième seuil.

10. Méthode de commande d'un appareil de climatisation selon l'une quelconque des revendications précédentes, la méthode comprenant
- l'acquisition de premières informations relatives à une première quantité indicative d'une température du milieu s'écoulant à travers la conduite de retour (RL) ;
- l'acquisition de troisièmes informations relatives à une troisième quantité indicative d'une charge sur le moteur (ICE) ;
- la commande au deuxième dispositif de régulation d'écoulement d'autoriser le quatrième écoulement (B2) et d'au moins limiter le deuxième écoulement (B1) au-dessous de la quantité d'écoulement possible maximale lorsque les premières et troisièmes informations indiquent que les première et troisième quantités sont respectivement supérieure à un troisième seuil et inférieure à un quatrième seuil.

11. Méthode selon la revendication 10, dans laquelle le deuxième écoulement est limité sur la base des troisièmes informations, de sorte que la quantité du milieu s'écoulant diminue avec la troisième quantité, en particulier jusqu'à ce qu'une interdiction complète du deuxième écoulement soit atteinte.

12. Méthode de commande d'un appareil de climatisation selon la revendication 10 ou 11, la méthode comprenant :
- la détermination si un dispositif ralentisseur (RD) couplé au moteur (ICE) est activé ou désactivé ;
- la commande au troisième dispositif de régulation d'écoulement d'autoriser le sixième écoulement (C2) lorsqu'il est déterminé que le dispositif ralentisseur (RD) est activé ;
- la commande au deuxième dispositif de régulation d'écoulement d'interdire l'écoulement du milieu depuis la troisième ouverture (O2) vers le refroidisseur d'air de suralimentation (CAC) lorsqu'il est déterminé que le dispositif ralentisseur (RD) est activé.

13. Méthode selon la revendication 12, comprenant en outre
- la commande au troisième dispositif de régulation d'écoulement et/ou au premier dispositif de régulation d'écoulement d'interdire respectivement le cinquième écoulement (C1) et/ou le premier écoulement (A1) lorsqu'il est déterminé que le dispositif ralentisseur (RD) est activé.
